# EUROPÄISCHE PATENTSCHRIFT

(11) **EP 0 806 398 B1**
(45) Veröffentlichungstag und Bekanntmachung des Hinweises auf die Patenterteilung: **13.03.2002**
(21) Anmeldenummer: 97106995.0
(22) Anmeldetag: 28.04.1997
(51) Int. Cl.: C02F 1/32, A61L 2/10

(54) **Anlage für die Entkeimung strömender Medien, wie Wasser**
Installation for disinfection of fluids such as water
Installation de désinfection des fluides tel que de l'eau

(30) Priorität: 09.05.1996 DE 29608441 U
(43) Veröffentlichungstag der Anmeldung: 12.11.1997
(73) Patentinhaber: EISENWERKE FRIED. WILH. DÜKER AG & Co.KG aA., D-97753 Karlstadt (DE)
(72) Erfinder: Bergmann, Karl-Heinz, 63768 Hösbach-Feldkahl (DE); Rammensee, Armin, 63872 Heimbuchenthal (DE)
(74) Vertreter: Patentanwälte Leinweber & Zimmermann

(56) Entgegenhaltungen:
- EP-A- 0 602 505
- DE-A- 2 616 383
- DE-A- 2 851 013
- DE-A- 4 033 792
- US-A- 3 637 342

## Beschreibung

Die Erfindung bezieht sich auf eine Anlage für die Entkeimung strömender Medien, wie Wasser, mit einem im wesentlichen zylindrischen Behälter, in dem ein Reaktorraum mit am Umfang eines konzentrisch angeordneten Teilkreises liegenden UV-Strahlern vorgesehen ist und der auf seiner einen Seite eine Zulauföffnung und auf seiner gegenüberliegenden Seite eine achsgleich liegende Ablauföffnung für das den Reaktorraum achsparallel durchströmende Medium umfaßt.

Bei einer bekannten Entkeimungsanlage dieser Art (DE OS 28 51 013) ist aufgrund der achsgleich liegenden Zu- und Ablauföffnungen zwar für eine direkte Einbaubarkeit in einen Leitungsstrang gesorgt, ohne daß es zusätzlicher platzraubender und strömungsungünstiger Formstücke für den Anschluß an die Leitung bedarf. Der Reaktorraum ist jedoch durch einen an der Außenseite eines den Behälter zentral durchsetzenden Ablaufrohrs vorgesehenen, die achsparallelen UV-Strahler enthaltenden Ringraum gebildet, durch den das von der Zulauföffnung zugeführte Medium an den Strahlern sowie der Ablaufrohraußenseite entlang hindurchströmt, bis es schließlich das Ende des Ringraums und die dort befindliche Mündung des zur Ablauföffnung führenden zentralen Ablaufrohrs erreicht.

Bei dieser Ausführung hat sich die Tatsache als nachteilig herausgestellt, daß das zu behandelnde Medium im Anschluß an die während der Durchströmung des Ringraums erfolgende Bestrahlung innerhalb des Behälters eine längere Wegstrecke ohne Bestrahlungsmöglichkeit zurücklegen muß, die praktisch dem Weg vom Zulauf bis zur Mündung des zentralen Ablaufrohrs entspricht. Dadurch verbleibt innerhalb der Anlage viel Raum ungenutzt, ganz abgesehen von Reibungskräften, die beim Hindurchpumpen der Medien durch die Anlage die Aufbringung zusätzlicher Energie erforderlich machen.

Der Erfindung liegt die Aufgabe zugrunde, die Anlage der eingangs genannten Art unter Beibehaltung der achsgleichen Ausrichtung der Zu- und Ablauföffnungen des Behälters so weiter auszugestalten, daß eine kompaktere Ausbildung mit kürzerem Strömungsweg für das zu behandelnde Medium und somit geringerem Energiebedarf bei Betrieb der Anlage ermöglicht ist.

Die Anlage nach der Erfindung, bei der diese Aufgabe gelöst ist, zeichnet sich im wesentlichen dadurch aus, daß der Reaktorraum im Zentrum des Behälters angeordnet ist und daß sich die UV-Strahler durch eine Ablaufkammer, die mit der sich an einer Behälterseite in der Behältermitte befindlichen Ablauföffnung unmittelbar verbunden ist, und durch den Reaktorraum hindurch bis in eine Zulaufkammer hinein erstrecken, die sich an die an der anderen Behälterseite in der Behältermitte befindliche Zulauföffnung unmittelbar anschließt.

Bei einer derartigen Anlage ist in vorteilhafter Weise sichergestellt, daß das Medium auf relativ kurzem Wege von der Zulauföffnung des Behälters in den Wirkungsbereich der UV-Strahler gelangt und ebenso, nämlich praktisch unmittelbar nach Verlassen dieses Wirkungsbereichs durch die Ablauföffnung aus dem Behälter wieder austritt. Der Platzbedarf für die Medienführung innerhalb des Behälters ist somit auf ein Minimum reduziert und eine höhere Effektivität der Medienbehandlung erreicht.

Als sehr günstig hat es sich weiterhin erwiesen, daß mit dieser Ausbildung die optimale Voraussetzung für eine Strömungssteuerung geschaffen ist, indem im Reaktorraum mindestens ein sich quer zur Behälterachse erstreckendes, von den UV-Strahlern durchsetztes Lochblech mit Lochungen unterschiedlicher Größe bzw. Dichte vorgesehen ist, durch deren Abstimmung aufeinander die Durchflußmenge pro jeweiliger Querschnittsfläche optimierbar ist.

Zweckmäßigerweise ist dieses Lochblech in Form einer zentralen Lochscheibe und mindestens eines mit dem Scheibenrand komplementären und die Scheibe ergänzenden Lochrings ausgebildet. Auf diese praktische Weise ist die Möglichkeit gegeben, für die Lochscheibe einen gegenüber dem Lochring abweichenden optimalen Durchflußquerschnitt zu wählen.

In sehr günstiger Weise entspricht der Durchmesser der Lochscheibe dem Durchmesser des Teilkreises, auf dem die Achsen der UV-Strahler liegen. Auf diese Weise ist es möglich, die UV-Strahler einerseits vom Lochscheibenrand und andererseits vom Lochring zu erfassen.

In sehr vorteilhafter weiterer Ausgestaltung der Anlage nach der Erfindung ist vorgesehen, daß dem/den Lochblechen eine Antriebseinrichtung zum Verschieben längs und damit Reinigen der UV-Strahler zugeordnet ist. Zum diesem Zweck ist den Lochscheiben zweckmäßigerweise eine Wischeinrichtung zugeordnet.

Als zweckmäßig hat es sich herausgestellt, wenn der Behälter durch eine Deckplatte verschließbar ist, an der sämtliche UV-Strahler festgelegt sind. Dadurch ist sichergestellt, daß sich alle UV-Strahler beim Lösen und Entfernen der Deckplatte gemeinsam vom Behälter abheben und entfernen lassen.

Aus dem gleichen Grunde ist es besonders günstig, wenn auch die dem Verschiebeantrieb zum Reinigen der UV-Strahler dienende, mit der/den Lochplatten verbundene Antriebseinrichtung an der Deckplatte festgelegt ist. Bei allfälligen Wartungsarbeiten gibt dies nämlich die Möglichkeit, die gesamte Antriebseinrichtung mitsamt der/den Lochplatten abzuheben und zu entfernen.

Weitere Einzelheiten, Vorteile und Merkmale der Erfindung ergeben sich aus der folgenden Beschreibung anhand der beigefügten Zeichnung, und zwar zeigen
- Fig. 1: eine schematische Seitenansicht, teilweise im Schnitt, einer Anlage nach der Erfindung und
- Fig. 2: einen sehr schematischen Horizontalschnitt durch den zentralen Reaktorraum mit dem ihn quer durchsetzenden Lochblech.

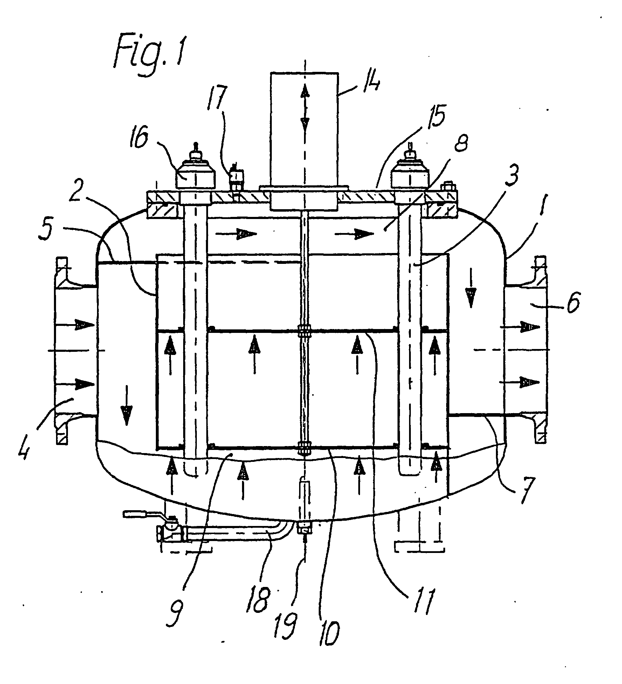

Wie aus der Zeichnung ersichtlich, umfaßt die veranschaulichte Anlage für die Entkeimung strömender Medien, wie Wasser, einen im wesentlichen zylindrischen Behälter 1, in dem ein Reaktorraum 2 mit am Umfang eines konzentrisch angeordneten Teilkreises liegenden UV-Strahlern 3 vorgesehen ist. Jeder UV-Strahler 3 umfaßt in herkömmlicher Weise den eigentlichen rohrförmigen Strahler, der von einem Quarzschutzrohr umgeben ist. Der Reaktorraum 2, der wie der Behälter 1 im wesentlichen zylindrisch geformt ist, ist auf Seiten der Zulauföffnung 4 über eine obere Wand 5 an der Innenseite des Behälters 1 festgelegt und an der diametral gegenüberliegenden Seite im Bereich der Ablauföffnung 6 analog über eine untere Wand 7. Wie aus Fig. 1 ersichtlich, ist der Reaktorraum 2 im Zentrum des Behälters 1 angeordnet. Die UV-Strahler 3 erstrecken sich durch eine Ablaufkammer 8 hindurch, die mit der sich an einer Behälterseite etwa in der Behältermitte befindlichen Ablauföffnung 6 unmittelbar verbunden ist. Außerdem erstrecken sie sich durch den Reaktorraum 2 hindurch bis in eine Zulaufkammer 9 hinein, die sich an die an der anderen Behälterseite etwa in der Behältermitte befindliche Zulauföffnung 4 unmittelbar anschließt. Die in Fig. 1 eingezeichneten Pfeile verdeutlichen den kurzen Weg der die Anlage durchströmenden Medien von der Zulauföffnung 4 zur Ablauföffnung 6.

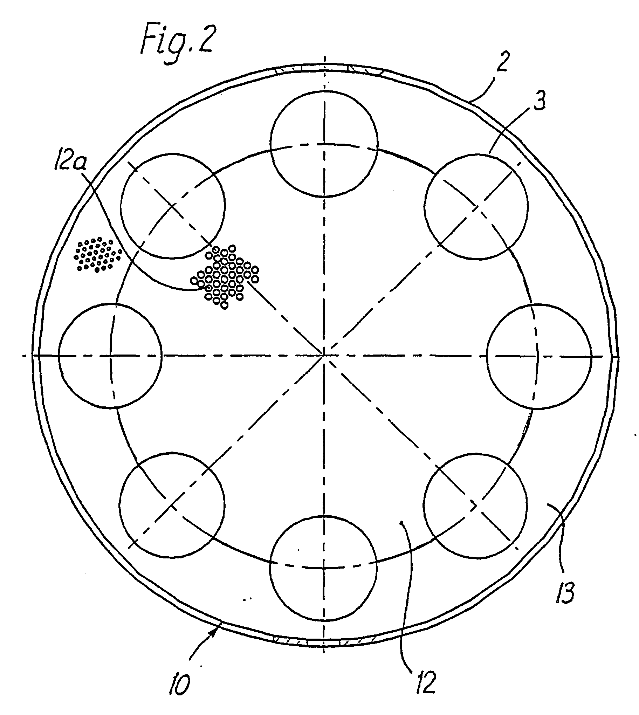

Zur Steuerung der Strömung durch den Reaktorraum 2 sind in letzterem Lochbleche 10 bzw. 11 vorgesehen, die sich quer zur Behälterachse erstrecken und von den UV-Strahlern 3 durchsetzt sind. Diese Lochbleche 10, 11 sind mit Lochungen 12a, vgl. Fig. 2, unterschiedlicher Größe bzw. Dichte versehen, durch deren Abstimmung aufeinander die Durchflußmenge pro jeweiliger Querschnittsfläche optimierbar ist.

Wie Fig. 2 zeigt, ist jedes Lochblech in Form einer zentralen Lochscheibe 12 und mindestens eines mit dem Scheibenrand komplementären und so die Scheibe ergänzenden Lochrings 13 ausgebildet. Dadurch ist auf besonders einfache Weise die Möglichkeit gegeben, für die Lochscheibe einen gegenüber dem Lochring abweichenden optimalen Durchflußquerschnitt zu wählen. Der Durchmesser der Lochscheibe 12 entspricht, wie sich der Fig. 2 entnehmen läßt, dem Durchmesser des Teilkreises auf dem die Achsen der UV-Strahler 3 liegen. Dadurch lassen sich die UV-Strahler einerseits vom Lochscheibenrand und andererseits vom Lochring erfassen.

Fig. 1 zeigt, daß den Lochblechen 10, 11 eine Antriebseinrichtung 14 zum Verschieben der Lochbleche und damit Reinigen der UV-Strahler zugeordnet ist. Zu diesem Zweck umfassen die Lochscheiben 10, 11 zweckmäßigerweise eine nicht näher veranschaulichte Wischeinrichtung.

Wie aus Fig. 1 ersichtlich, umfaßt der Behälter 1 eine Deckplatte 15, die mit dem Rand einer Öffnung des Behälters 1 verschraubbar ist. An dieser Deckplatte 15 sind einerseits sämtliche UV-Strahler 3 festgelegt, so daß sie sich beim Lösen und Entfernen der Deckplatte 15 gemeinsam vom Behälter abheben und entfernen lassen. Dies gilt auch für die Antriebseinrichtung 14 zur Betätigung des Verschiebeantriebs für das Reinigen der UV-Strahler 3.

An Details ist der Fig. 1 zu entnehmen, daß die UV-Strahler jeweils über eine Verschraubungseinheit 16 mit Abdichtung an der Abdeckplatte 15 festgelegt sind, ebenso eine automatische Entlüftung 17. Für das bedarfsweise vollständige Entleeren des Behälters 1 ist an dessen tiefster Stelle ein Entleerungsrohr 18 vorgesehen. Die Intensität der UV-Strahlung läßt sich mittels eines ebenfalls im Bodenbereich des Behälters 1 vorgesehenen UV-Sensors 19 ermitteln.

## Patentansprüche

1. Anlage für die Entkeimung strömender Medien, wie Wasser, mit einem im wesentlichen zylindrischen Behälter (1), in dem ein Reaktorraum (2) mit am Umfang eines konzentrisch angeordneten Teilkreises liegenden UV-Strahlern (3) vorgesehen ist und zu dem auf seiner einen Seite eine Zulauföffnung (4) und auf seiner gegenüberliegenden Seite eine achsgleich liegende Ablauföffnung (6) für das den Reaktorraum (2) achsparallel durchströmende Medium umfaßt, **dadurch gekennzeichnet, daß** der Reaktorraum (2) im Zentrum des Behälters (1) angeordnet ist und daß sich die UV-Strahler (3) durch eine Ablaufkammer (8), die mit der sich an einer Behälterseite in der Behältermitte befindlichen Ablauföffnung (6) unmittelbar verbunden ist, und durch den Reaktorraum (2) hindurch bis in eine Zulaufkammer (9) hinein erstrecken, die sich an die an der anderen Behälterseite in der Behältermitte befindliche Zulauföffnung (4) unmittelbar anschließt.

2. Anlage nach Anspruch 1, **dadurch gekennzeichnet, daß** im Reaktorraum (2) mindestens ein sich quer zur Behälterachse erstreckendes, von den UV-Strahlern (3) durchsetztes Lochblech (10, 11) mit Lochungen (12a) unterschiedlicher Größe bzw. Dichte vorgesehen ist, durch deren Abstimmung aufeinander die Durchflußmenge pro jeweiliger Querschnittsfläche optimierbar ist.

3. Anlage nach Anspruch 2, **dadurch gekennzeichnet, daß** jedes Lochblech ((10, 11) in Form einer zentralen Lochscheibe (12) und mindestens eines mit dem Scheibenrand komplementären und die Scheibe ergänzenden Lochrings ausgebildet ist.

4. Anlage nach Anspruch 3, **dadurch gekennzeichnet, daß** der Durchmesser der Lochscheibe (12) dem Durchmesser des Teilkreises entspricht, auf dem die Achsen der UV-Strahler (3) liegen.

5. Anlage nach einem der Ansprüche 2 bis 4, **dadurch gekennzeichnet, daß** dem/den Lochblechen (10, 11) eine Antriebseinrichtung (14) zum Verschieben längs und damit Reinigen der UV-Strahler (3) zugeordnet ist.

6. Anlage nach einem der Ansprüche 1 bis 5, **dadurch gekennzeichnet, daß** der Behälter (1) durch eine Deckplatte (15) verschließbar ist, an der sämtliche UV-Strahler (3) festgelegt sind.

7. Anlage nach einem der Ansprüche 1 bis 6, **dadurch gekennzeichnet, daß** die dem Verschiebeantrieb zum Reinigen der UV-Strahler (3) dienende, mit der/den Lochplatten verbundene Antriebseinrichtung (14) an der Deckplatte (15) festgelegt ist.

## Claims

1. Installation for disinfecting flowing media, such as water, said installation having a substantially cylindrical container (1), in which a reactor chamber (2) is provided with UV radiation emitters (3) located on the circumference of a concentrically disposed graduated circle, and which, on one of its sides, has an inlet (4) and on its opposite side a co-axial outlet (6) for the medium flowing parallel to the axis through the reactor chamber (2), **characterized in that** the reactor chamber (2) is disposed in the centre of the container (1) and **in that** the UV radiation emitters (3) extend through an outlet chamber (8), which is directly connected to the outlet (6) located on one side of the container in the middle of the container, and through the reactor chamber (2) into an inlet chamber (9) which directly follows on from the inlet (4) located on the other side of the container in the middle of the container.

2. Installation according to Claim 1, **characterized in that** in the reactor chamber (2) at least one perforated metal plate (10, 11) is provided, which extends at right angles to the axis of the container, is passed through by UV radiation emitters (3) and has perforations (12a) which vary as to their size and spacing, as a result of the adjustment of which in relation to one another the rate of flow per actual cross-sectional area can be optimised.

3. Installation according to Claim 2, **characterized in that** each perforated plate (10, 11) consists of a central perforated disk (12) and at least one perforated ring which is complementary with the edge of the disk and completes the disk.

4. Installation according to Claim 3, **characterized in that** the diameter of the perforated disk (12) corresponds to the diameter of the graduated circle, on which the axes of the UV radiation emitters (3) are located.

5. Installation according to one of Claims 2 to 4, **characterized in that** driving means (14) are associated with the perforated plate(s) (10, 11) for moving them along the UV radiation emitters (3) and thus cleaning them.

6. Installation according to one of Claims 1 to 5, **characterized in that** the container (1) can be sealed by means of a cover plate (15), on which all the UV radiation emitters (3) are mounted.

7. Installation according to one of Claims 1 to 6, **characterized in that** the driving means (14) connected to the perforated plate(s) and serving to move them for cleaning the UV radiation emitters (3) are fixed to the cover plate (15).

## Revendications

1. Installation de désinfection de fluides tels que l'eau avec un conteneur sensiblement cylindrique (1), dans lequel est prévue une chambre de réacteur (2) avec des émetteurs de rayonnement UV (3) se trouvant sur le pourtour d'un cercle gradué concentrique et qui comprend sur l'un de ses côtés une ouverture d'entrée (4) et sur son côté opposé une ouverture de sortie (6) placée sur le même axe pour le fluide traversant la chambre de réacteur (2) parallèlement à son axe, **caractérisé en ce que** la chambre de réacteur (2) est disposée au centre du conteneur (1) et **en ce qu'**à travers une chambre d'évacuation (8), qui est directement reliée à une ouverture de sortie (6) se trouvant d'un côté du conteneur au centre de celui-ci, et à travers la chambre de réacteur (2) les émetteurs de rayonnement UV (3) s'étendent jusque dans une chambre d'entrée (9), qui est placée directement à la suite de l'ouverture d'entrée (4) se trouvant de l'autre côté du conteneur au centre de celui-ci.

2. Installation selon la revendication 1, **caractérisée en ce que** dans la chambre de réacteur (2) est prévue au moins une tôle perforée (10, 11), qui s'étend en direction transversale par rapport à l'axe du conteneur, qui est traversée par les émetteurs de rayonnement UV et qui comprend des perforations (12a) de différentes tailles et densités, au moyen de l'ajustement desquelles les unes par rapport aux autres il est possible d'optimiser le débit par surface de section respective.

3. Installation selon la revendication 2, **caractérisée en ce que** chaque tôle perforée (10, 11) est conçue sous forme d'un disque perforé central (12) et d'au moins une bague perforée complémentaire du bord du disque et complétant le disque.

4. Installation selon la revendication 3, **caractérisée en ce que** le diamètre du disque perforé (12) correspond au diamètre du cercle gradué, sur lequel se trouvent les axes des émetteurs de rayonnement UV.

5. Installation selon l'une des revendications 2 à 4, **caractérisée en ce qu'**à la(aux) tôle(s) perforée(s) (10, 11) est attribué un dispositif d'entraînement (14) pour assurer un déplacement le long des émetteurs de rayonnement UV (3) et par conséquent pour leur nettoyage.

6. Installation selon l'une des revendications 1 à 5, **caractérisée en ce que** le conteneur (1) peut être fermé par une plaque d'obturation (15), sur laquelle sont fixés tous les émetteurs de rayonnement UV (3).

7. Installation selon l'une des revendications 1 à 6, **caractérisée en ce que** le dispositif d'entraînement (14) servant à imprimer le mouvement de déplacement pour le nettoyage des émetteurs de rayonnement UV (3) et relié à la(aux) plaque(s) perforée(s), est fixé sur la plaque d'obturation (15).
